# EUROPEAN PATENT SPECIFICATION

(11) **EP 1 328 488 B1**
(45) Date of publication and mention of the grant of the patent: **08.07.2009**
(21) Application number: 01988702.5
(22) Date of filing: 23.10.2001
(51) Int. Cl.: C04B 28/08, E01C 3/00

(54) **CATALYZED HYDRAULIC MIXTURES CONTAINING INERT MATERIALS FOR MAKING NON POLLUTING ARTICLES AND THE ARTICLES MADE THEREBY**
KATALYTISCHE HYDRAULISCHE MISCHUNGEN, DIE INERTE MATERIALIEN FÜR DIE HERSTELLUNG VON UMWELTFREUNDLICHEN ERZEUGNISSEN ENTHALTEN UND DARAUS HERGESTELLTE ERZEUGNISSE
MELANGES HYDRAULIQUES CATALYSES CONTENANT DES MATERIAUX INERTES PERMETTANT DE PREPARER DES ARTICLES NON POLLUANTS, ET ARTICLES PREPARES A PARTIR DESDITS MELANGES

(30) Priority: 24.10.2000 IT MI20002294
(43) Date of publication of application: 23.07.2003
(73) Proprietor: Pescale S.p.A., 42014 Castellarano (RE) (IT); S.M.I.A., Srl, 00128 Roma (IT); HERA S.p.A., 40127 Bologna (BO) (IT)
(72) Inventor: TOSCHI, Angelo, I-42014 Castellarano (IT); FORNASARI Dr., Eleonora, I-00144 Roma (IT); CIAMPICACIGLI, Stefano, I-00161 Roma (IT)
(74) Representative: Zanella, Ireneo
(86) International application number: PCT/EP2001/012212
(87) International publication number: WO 2002/034691

(56) References cited:
- EP-A- 0 547 923
- EP-A- 0 767 150
- DE-A- 3 603 862
- DE-A- 19 607 081
- FR-A- 2 740 060

## Description

### Field of the Invention

The present invention relates to catalyzed hydraulic mixtures containing inert materials for making non polluting articles, and to the articles made thereby, according to the preambles of claims 1 and 10.

### Background of the Invention

As is known, for disposing of urban, industrial and the like waste, a thermal-destruction or incineration method is broadly used. In this disposal method, however, great amounts of ashes deriving from a burnt highly polluting waste materials are generated. In Italy, for example, said ashes or slags amount to about 1.5 million tons/year, and it is submitted that, within two years, said amounts will be tripled.

In view of severe anti-polluting regulations on the disposal of said slags and ashes, incinerating and/or co-generating operating works are compelled to continuously search new disposable sites for disposing therein the mentioned ashes. Moreover, in addition to being difficult, such a disposal of burnt-said waste ashes is rather expensive.

Actually, to dispose said ashes, methods for mixing small portions of said ashes with concrete, in a rate of 5/7%, and for using the formed mixture in conventional applications, have been devised. However, the involved amounts are rather small, and such a disposal method is mainly directed to fly ashes, and accordingly has a rather limited application field.

It is likewise known to dispose other slags from metallurgic thermal processes by mixing them with quarry aggregates or inert materials, and related catalyzers, and then with water to provide agglomerates suitable for making articles of manufacture, such as, for example, road and railroad enbankments, upperworks, yard floorings and the like. These hydraulic catalyzed conglomerates are made as prior concrete agglomerates and can be likewise used for making desired works or articles of manufacture. Prior hydraulic catalyzed conglomerates are also broadly used and recommended in work tender specifications, for example of the Italian corporations A.N.A.S. (Azienda Nazionale Autonoma delle Strade - National Road Board) and FF.SS. (Ferrovie dello Stato - State Railways).

While prior hydraulic catalyzed conglomerates have satisfactory geotechnical and environmental characteristics, they are affected by several drawbacks and disadvantages, since they exclusively use comparatively great amounts of quarry aggregates which, as is known, are hardly available.

Moreover, regulations on establishing new quarries provide for a stringent mating to territorial preserving rules and the consequent required environmental recovering would cause a great increase of the quarry inert material cost and, accordingly, of the agglomerates made therefrom.

It is furthermore known that local public authorities are searching, through their urban areas, novel disposal sites to dispose of therein building demolition debris in a comparatively high amount, which, for example in Italy, is of several million tons/year.

To the foregoing it should also be added that waste or refuse incinerator operating works are also continuously searching new disposal sites for disposing of therein combustion ashes which, for example, in Italy amount to dozen million tons by year.

The above briefly disclosed problems for Italy are also substantially true for other countries, in some of which anti-polluting and territory preserval regulamentations are even more stringent.

The Inventors of this application, in the previous Italian patent 1:313.077 have already disclosed catalyzed hydraulic mixtures of industrial slags from metallurgic thermal processes on ferrous and not ferrous metals, and for recovery inert materials from building demolitions, as processed by suitable catalyzers; in said prior application, moreover, suitable mixing rates for the mixture components, and methods for using the necessary catalyzers and dry storing the mixtures, and for using said mixtures to make conglomerates to produce desired articles of manufacture have also been disclosed.

### Summary of the Invention

Thus, the aim of the present invention is to provide a truly ecological and inexpensive disposal of a comparatively high amount of the above mentioned ashes from urban or the like waste burning processes.

This aim is achieved, according to the invention, by the mixtures and articles of manufacture made thereby, having the features of claims 1 and 10, respectively.

Further advantageous developments and compositions are disclosed in the sub-claims.

Actually, the same inventors have surprisingly found that the catalyzed hydraulic mixtures for disposing of industrial slags, (i.e. metallurgic slags from extraction processes on minerals to extract therefrom ferrous and not ferrous metals and blast furnace slags of the metallurgic works and/or ashes from burnt coal in thermoelectric power system, and related basic catalyzers), are basically suitable, upon reformulating their compositions and with suitable particle sizes and rates, to provide a reliable confinement even of the polluting substances of said ashes from burnt urban wastes, or the like, in articles of manufacture made thereby.

The basic teaching of the invention substantially consists of suitably replacing, in said catalyzed hydraulic mixtures, the metallurgic slags from ferrous and non ferrous metal extraction processes by said urban waste or the like burnt ashes, while providing a suitable particle size and rate.

The mixtures and articles of manufacture according to the present invention provide several important advantages.

At first, the inventive mixtures have geotechnical and performance features fully analogous to those of prior catalyzed hydraulic conglomerates, and other alternative products, such as dry quarry materials, either in a fractured or non fractured form, stabilized mixed materials for road enbankments, cemented or bituminous mixed materials and the like.

Moreover, the inventive mixtures can be made much more inexpensively than prior catalyzed hydraulic mixtures with quarry inert materials, of which, however, they hold the easily forming and laying practical advantages.

Thus the present invention allows to overcome, in a very simple, reliable and inexpensive manner, all of the problems related to the inclusion of polluting substances in said ashes, both of light and heavy nature, from burnt solid urban or the like waste materials.

Yet another advantage of the novel mixtures herein taught, is that they substantially hold unchanged all the advantages of the industrial slag containing catalyzed hydraulic mixtures. In fact, the inventive mixtures can be used in a lot of application fields, such, for example, in making said road and railroad enbankments and upperworks, yard floorings, and for performing environmental recovery works on quarries and disposal sites, reclaiming polluted sites to be waterproofed, in disposal place foundations and the like.

They, moreover, in an embodiment thereof including exclusively dry materials, can be stored even for a comparatively long time, without decreasing the machining properties thereof, the hydraulic setting being advantageously activated only upon forming the agglomerate, or after adding water. Likewise, all the catalyzers, or a portion thereof, are provided in a liquid phase, so as to facilitate the forming, conveying and storing of the mixtures which, anyhow, will be ready for making the related agglomerates by merely adding the necessary water.

Moreover, after having prepared the mixtures with water and catalyzers, the agglomerate can be stored for 3-4 days before starting the agglomerate setting, thereby preserving in this period its processing characteristics unaltered. This is a very important advantage since it allows to stop the works, for example in weekends or holiday days without negatively affecting processing properties and characteristics of the subject materials.

Likewise, the setting of the inventive agglomerates is a slow one, thereby providing the following further advantages:
- upon casting or processing the agglomerate, it can be used in a very easy manner;
- it is possible to meet, in a very simple manner, the intended compaction requirements:
- since the activation of the mixtures advantageously requires a comparatively small amount of water, they can be pre-packaged and stored even for long time periods.

A further important aspect of the inventive mixtures is that building demolition inert materials are available, even in a processed condition thereof, at a low cost, thereby the inventive mixtures and articles of manufacture can be advantageously made in a inexpensive manner.

Yet another important aspect is that the subject mixtures substantially consist of waste materials of otherwise difficult and expensive disposal, such as: 1) waste materials from demolition debris processes and 2) waste materials from incineration of solid urban waste or the like. Thus, the quarry inert material extraction and disposal site requirements would be greatly reduced, with consequent economic and environmental advantages.

Further characteristics, details and advantages of the mixtures according to the invention and articles of manufactures made thereby, will become more apparent hereinafter from the following disclosure of several exemplary embodiments thereof.

More specifically, the mixtures according to the invention substantially comprise:
a) inert materials substantially, and preferably fully, derived from building demolition debris as suitably ground, processed and granulometrically sieved;
b) ashes and slags comprising:
   - b1) light and heavy ashes, i.e. residue derived from burnt solid urban waste or the like;
   - b2) blast furnace slags and light ashes from the metallurgic works and/or burnt coal in thermoelectric power systems;
c) catalyzer agents designed for absorbing and neutralizing slag polluting materials.

Accordingly to the invention, the above mentioned components are used with respective granulometric or particle size ranges and volume rates found by specifically designed searches and tests, and adapted to meet a desired geotechnical characterization.

More specifically, said suitably selected, metered and mixed catalyzer agents can be made either in a powder form and/or, as required, in an aqueous solution form. They, in particular, are preferably selected and metered to provide time delayed polluting material absorption or separating actions, as hereinafter disclosed, to provide and constantly hold a basic environment having a pH of at least 11 which, like that of industrial slag containing mixtures, while enhancing the hydraulic power of granulated slags and blast furnace light ashes, affected thereby.

It should be moreover pointed out that the metering of the slags and/or the blast furnace light ashes, which, as is known, comprise lime, silica and alumina, will depend both on the used inert material type and the application use of the intended articles of manufacture, since the slags affect the hydraulic mixture setting and, performance characteristics. At low doses, the slags are advantageously preliminary slightly broken to provide a particle size or granulometry in a range of 0.05 - 1.5 mm, with about 15% of said slag having a particle size less than 100 µm.

Moreover, it would also be possible to use inert materials, even in a unwashed condition, from building debris frantumating processes, in a rate of 20 to 60%, to assure an inclusion of a limestone material suitable amount.

Thus, upon suitably verifying their overall granulometric range said ashes will complete the mixtures.

The confinement or neutralization of polluting materials contained in said ashes is assured by a sort of inertizing effect from a recrystalization of hydrated slags of said blast furnace slag and/or light ashes in said constantly held basic environment, and the limestone material of building demolition inert materials, as in prior mixtures for disposing of industrial slags.

Thereinbelow will be disclosed several examples of catalyzed hydraulic mixture compositions containing ashes from burnt urban solid waste or the like, and of inert materials according to the invention.

### Example 1

Inert materials derived from demolition debris processes with a granulometry of 0.05-15 mm, a volume rate of 37%; slags with a granulometry of 0.1-1.5 mm, a volume rate of 12%; burnt ashes, with a granulometry of 0.05-30 mm, volume rate of 50%; and catalyzers i.e.: basic catalyzers in powder form with a volume rate of 0.6%, and basic catalyzers diluted to 50% in water, with a volume rate of 0.4%.

### Example 2

Inert materials from demolition debris processes, with a granulometryy of 0.01-15 mm, a volume rate of 50%; slag with a granulometry of 0.1-1.5 mm, a volume rate of 10%; heavy and light ashes from waste burning processes, with a granulometry of 0.05-30 mm, a volume rate of 39%; and catalyzers i.e.: basic catalyzers in powder form, with a volume rate of 1.0%.

### Example 3

Inert materials, from demolition debris processes, with a granulometry of 0.01-30 mm, a volume rate of 30%; slag with a granulometry of 0.01-1.5 mm, a volume rate of 10%; blast furnace light ashes with a granulometry of 0.001-1.0 mm, a volume rate of 9%; ashes from solid urban waste or the like burning processes, with a granulometry of 0.05-30 mm, a volume rate of 50%; and catalyzers i.e.: basic catalyzers in powder form, with a volume rate of 0.3%, and basic catalyzers diluted to 50% in water, with a volume rate of 0.7%.

### Preparing of conglomerates for making articles of manufacture smarting from the inventive mixtures

For making articles of manufactures starting from industrial slag containing mixtures, the following processing method can be advantageously used.

The individual components of the mixtures together with powder-form catalyzers, are supplied to tanks of a per se known volumetric metering-mixing system, in component amounts preset depending on the intended application and desired performance characteristics of the articles.

Thus, the mixture will comprise dry components and can be stored, conveyed to the building site, or mixed, if desired, with a necessary amount of water to provide an optimum density of the agglomerate density, controlled by a per se known Proctor test.

While said catalyzers can be formed and used in powder form for addition to other components to form dry mixtures, they, or some of them according to a preferred embodiment of the invention, can also be used as an aqueous solution while is added to the mixture to form the intended agglomerate. This would allow to start the activation of the hydraulic setting by merely adding water.

Actually the three components of the slags, i.e. lime, silica and alumina, included in a basic environment with a pH of at least 11, formed by adding an aqueous solution containing dissolved soda, lime and calcium sulphate as catalyzers, will form a solution and crystallize to hydrated salts. The hydraulic setting rate, on the other hand, will depend on the component dissolving rate, which is a specific feature of the used slags, and on the specific surface of said slags, catalyzer type, quality and temperature. The conglomerate made upon adding water has a slow setting, thereby the small-value and difficult to be disposed of residue component materials will provide the articles of manufacture made therefrom with very valuable geotechnical, elasticity, waterproofing and strength properties.

In particular the hydraulic setting of the inventive mixture is rather slow, since it progressively occurs as follows:
- a slow setting increase in the first three or four weeks;
- a setting acceleration from the second to the sixth ageing month;
- a setting slowing down, but with a continuously growing of crystalization up to the third year, with a progressive flattening of the strength curve toward an asymtotic value corresponding to a maximum strength.

Finally, it should be pointed out that the agglomerated according to the invention can be made, conveyed and processed or cast by conventional equipment and means, without requiring customized apparatus on the building sites.

In practicing the invention those skilled in the art could also use different ashes from waste burning processes, or metallurgic slags, and corresponding catalyzer agents designed to provide the above disclosed conditions, without departing from the scope of the invention as disclosed and thereinbelow claimed.

## Claims

1. Catalyzed hydraulic mixtures for making non polluting articles of manufactures, **characterized in that** said mixtures comprise:
a) inert materials substantially or fully derived from building demolition debris which are previously suitably ground, processed and granulometrically sieved;
b) ashes and slags comprising:
b1) light and heavy ashes, i.e. residue derived from burnt solid urban waste;
b2) blast furnace slags and
light ashes from the metallurgic works and/or
burnt coal in thermoelectric power systems; and
c) catalyzer agents designed for absorbing and neutralizing slag polluting materials.

2. Mixtures according to Claim 1, **characterized in that** said catalyzers comprise lime and/or soda and/or calcium sulphate in a conventionally available form or also qualified as waste and are adapted to provide; as added with water, a basic environment, having a pH of at least 11.

3. Mixtures according to Claim 2, **characterized in that** the lime and calcium sulphate catalyzers are in powder form and adapted to be dry mixed with remaining components of said mixtures.

4. Mixtures according to Claim 2, **characterized in that** said lime and calcium sulphate catalyzers derive from neutralizing processes carried out in chemically-physically purifying water systems, or waste processing systems, and being mixed with the remaining components of said mixtures.

5. Mixtures according to Claim 2, **characterized in that** said soda catalyzer is an aqueous solution.

6. Mixtures according to one or more of the preceding claims, whereby said mixtures comprise:
a) inert materials with a granulometry in a range of 0.01 - 30 mm and a volume rate of 30%,
b1) ashes from solid urban waste burning process, with a granulometry in a range of 0.05 - 30 mm and a volume rate of 50%,
b2) light ashes, for example blast furnace ashes, with a granulometry in a range of 0.001 - 1.0 mm and a volume rate of 9%, and
slags, with a granulometry in a range of 0.01 - 1.5 mm and a volume rate of 10%, and
c) basic catalyzers
in powder form, with a volume rate of 0.3%, and
diluted in water to 50%, in a volume rate of 0.7%.

7. Mixtures according to one or more of the preceding claims 1-5, whereby said mixtures comprise:
a) inert materials with a granulometry in a range of 0.05 - 30 mm, with a volume rate in a range of 20 - 60%,
b1) ashes from burnt solid urban waste with a granulometry in a range of 0.05 -30 mm and a volume rate of at least 10%,
b2) light ashes, e.g. from blast furnaces or burnt coal of thermoelectric power systems, with a granulometry in a range of 0.001 - 1.0 mm and a volume rate in a range of 8 - 10%, and
blast furnace slags, from metallurgic work blast furnaces with a granulometry in a range of 0.05 - 3 mm and a volume rate in a range of 9-15%, and
c) basic catalyzers adapted to provide, as added with water, a basic environment, having a pH of at least 11.

8. Mixtures according to one or more of the preceding claims 1-5, whereby said mixtures comprise:
a) inert materials with a granulometry in a range of 0.05 - 15 mm and a volume rate of 37%,
b1) burnt waste ashes with a granulometry in a range of 0.05 to 30 mm and a volume rate of 50%,
b2) slags, with a granulometry in a range of 0.1 -1.5 mm and a volume rate of 12%, and
c) basic catalyzers
in a powder form, in a volume rate of 0.6%, and
in a 50% water diluted form, in a volume rate of 0.4%.

9. Mixtures according to one or more of the preceding claims 1-5, whereby said mixtures comprise:
a) inert materials with a granulometry in a range of 0.001-15 mm and a volume rate of 50%,
b1) heavy and light ashes, derived from waste burning processes, with a granulometry in a range of 0.05 - 30 mm and a volume rate of 39%,
b2) slags, with a granulometry in a range of 0.1 -1.5 mm and a volume rate of 10%, and
c) basic catalyzers in powder form, with a volume rate of 1%.

10. An article of manufacture, in the form of road and railroad enbankments, upperworks and yard floorings, **charaeterized in that** said article of manufacture is made starting from agglomerates prepared by the mixtures according to one or more of the preceding claims.

## Patentansprüche

1. Katalysierte hydraulische Mischungen zur Herstellung von umweltfreundlichen Erzeugnissen, **dadurch gekennzeichnet, dass** die Mischungen aufweisen:
a) inerte Materialien im Wesentlichen oder vollständig aus Bauschutt, die zuvor in geeigneter Weise zermahlen, verarbeitet und nach Korngrößen gesiebt werden;
b) Aschen und Schlacken, die aufweisen:
b1) leichte und schwere Aschen, d. h. Rückstände von verbranntem städtischem Abfall;
b2) Hochofenschlacken und
leichte Aschen aus metallurgischen Anlagen und/oder von in thermoelektrischen Kraftwerken verbrannter Kohle; und
c) zum Absorbieren und Neutralisieren von umweltschädlichen Schlackematerialien ausgebildeten Katalysatoren.

2. Mischung nach Anspruch 1, **dadurch gekennzeichnet, dass** die Katalysatoren Kalk und/oder Soda und/oder Kalziumsulfat in einer herkömmlich verfügbaren Form oder auch eingestuft als Abfall aufweisen und geeignet sind, um nach Zusatz von Wasser eine basische Umgebung mit einem pH-Wert von mindestens 11 bereitzustellen.

3. Mischung nach Anspruch 2, **dadurch gekennzeichnet, dass** die Kalk- und Kalziumsulfatkatalysatoren in Pulverform vorliegen und vorgesehen sind, um trocken mit den verbleibenden Komponenten der Mischungen vermischt zu werden.

4. Mischungen nach Anspruch 2, **dadurch gekennzeichnet, dass** die Kalk- und Kalziumsulfatkatalysatoren von Neutralisierungsprozessen erhalten werden, die in chemischphysikalischen Wasserreinigungssystemen oder Abwasseraufbereitungssystemen durchgeführt werden, und mit den verbleibenden Komponenten der Mischung vermischt werden.

5. Mischungen nach Anspruch 2, **dadurch gekennzeichnet, dass** der Sodakatalysator in einer wässrigen Lösung vorliegt.

6. Mischung nach einem oder mehreren der vorangehenden Ansprüche, wobei die Mischung aufweist:
a) inertes Material mit einer Korngrößenverteilung in einem Bereich von 0,01 bis 30 mm und in einem Volumenanteil von 30 %,
b1) Aschen von der Verbrennung städtischen Abfalls mit einer Korngrößenverteilung in einem Bereich von 0,05 bis 30 mm und in einem Volumenanteil von 50%,
b2) leichte Aschen, z. B. Hochofenaschen, mit einer Korngrößenverteilung in einem Bereich von 0,001 bis 1,0 mm und in einem Volumenanteil von 9 %, und
Schlacken mit einer Korngrößenverteilung in einem Bereich von 0,01 bis 1,5 mm und in einem Volumenanteil von 10 %, und
c) basische Katalysatoren in Pulverform in einem Volumenanteil von 0,3 % und verdünnt in Wasser auf 50 % in einem Volumenanteil von 0,7 %.

7. Mischung nach einem oder mehreren der vorangehenden Ansprüche 1 bis 5, wobei die Mischung aufweist:
a) inertes Material mit einer Korngrößenverteilung in einem Bereich von 0,05 bis 30 mm in einem Volumenanteil in einem Bereich von 20 bis 60 %,
b1) Asche von verbranntem städtischem Abfall mit einer Korngrößenverteilung in einem Bereich von 0,05 bis 30 mm und in einem Volumenanteil von mindestens 10 %;
b2) leichte Asche, z. B. aus Hochöfen oder von verbrannter Kohle aus thermoelektrischen Kraftwerken, mit einer Korngrößenverteilung in einem Bereich von 0,001 bis 1,0 mm und in einem Volumenanteil in einem Bereich von 8 bis 10 %, und
Hochofenschlacken aus Hochöfen metallurgischer Anlagen mit einer Korngrößenverteilung in einem Bereich von 0,05 bis 3 mm und in einem Volumenanteil in einem Bereich von 9 bis 15 %, und
c) basische Katalysatoren, die geeignet sind, wenn sie mit Wasser versetzt werden, eine basische Umgebung mit einem pH-Wert von mindestens 11 bereitzustellen.

8. Mischungen nach einem oder mehreren der vorangehenden Ansprüche 1 bis 5, wobei die Mischungen aufweisen:
a) inertes Material mit einer Korngrößenverteilung in einem Bereich von 0,05 bis 15 mm und in einem Volumenanteil von 37 %,
b1) Asche von verbrannten Abfällen mit einer Korngrößenverteilung in einem Bereich von 0,05 bis 30 mm und in einem Volumenanteil von 50 %,
b2) Schlacken mit einer Korngrößenverteilung in einem Bereich von 0,1 bis 1,5 mm und in einem Volumenanteil von 12 %, und
c) basische Katalysatoren in Pulverform in einem Volumenanteil von 0,6 % und in einer zu 50 % mit Wasser verdünnten Form in einem Volumenanteil von 0,4 %.

9. Mischungen nach einem oder mehreren der vorangehenden Ansprüche 1 bis 5, wobei die Mischungen aufweisen:
a) inerte Materialien mit einer Korngrößenverteilung in einem Bereich von 0,001 bis 15 mm und in einem Volumenanteil von 50 %,
b1) schwere und leichte Aschen aus Abfallverbrennungsprozessen mit einer Korngrößenverteilung in einem Bereich von 0,05-30 mm und in einem Volumenanteil von 39 %,
b2) Schlacken mit einer Korngrößenverteilung in einem Bereich von 0,1 bis 1,5 mm und in einem Volumenanteil von 10 %, und
c) basische Katalysatoren in Pulverform in einem Volumenanteil von 1 %.

10. Erzeugnis in Form von Straßen- oder Schienendämmen, Aufbauten oder Bodenbelägen, **dadurch gekennzeichnet, dass** das Erzeugnis ausgehend von Agglomeraten hergestellt ist, die aus den Mischungen nach einem der mehreren der vorangehenden Ansprüche zubereitet worden sind.

## Revendications

1. Mélanges hydrauliques catalysés pour préparer des articles manufacturés non polluants, **caractérisés en ce que** lesdits mélanges comprennent:
a) des matériaux inertes obtenus sensiblement ou entièrement de débris résultants de la démolition de bâtiments qui sont préalablement meulés d'une manière appropriée, traités et tamisés de manière granulométrique;
b) des cendres et des scories comprenant:
b1) des cendres légères et lourdes, c'est-à-dire des résidus résultant de déchets urbains solides brûlés;
b2) des scories de hauts fourneaux; et
des cendres légères de travaux métallurgiques et/ou
du charbon brûlé dans des systèmes thermoélectriques; et
c) des agents catalysants conçus pour absorber et neutraliser des matériaux de scories polluants.

2. Mélanges selon la revendication 1, **caractérisés en ce que** lesdits catalyseurs comprennent de la chaux et/ou soude et/ou calcium sulfate dans une forme généralement disponible ou également qualifiés comme déchets et sont aptes à fournier, après addition d'eau, un environnement basique ayant un pH d'au moins 11.

3. Mélanges selon la revendication 2, **caractérisés en ce que** les catalyseurs à chaux et sulfate de calcium se présentent sous forme de poudre et sont aptes à être mélangés à l'état sec avec des composants restants desdits mélanges.

4. Mélanges selon la revendication 2, **caractérisés en ce que** lesdits catalyseur à chaux et sulfate de calcium résultent de processus de neutralisation exécutés dans des systèmes purifiant chimiquement-physiquement l'eau ou des systèmes de traitement des déchets, et mélangés avec les composants restants desdits mélanges.

5. Mélanges selon la revendication 2, **caractérisés en ce que** ledit catalyseur de soude est une solution aqueuse.

6. Mélanges selon l'une ou plusieurs des revendications précédentes, lesdits mélanges comprenant:
a) des matériaux inertes d'une granulométrie dans une plage de 0,01-30 mm et d'un débit volumique de 30%,
b1) des cendres de processus de combustion de déchets urbains solides, avec une granulométrie dans une plage de 0,05-30 mm et un débit volumique de 50%,
b2) des cendres légères, par exemple des cendres de hauts fourneaux, avec une granulométrie dans une plage de 0,001-1,0 mm et un débit volumique de 9%, et
des scories, avec une granulométrie dans une plage de 0,01-1,5 mm et un débit volumique de 10%, et
c) des catalyseurs basiques sous forme de poudre, avec un débit volumique de 0,3% et
dilués dans de l'eau à 50%, dans un débit volumique de 0,7%.

7. Mélanges selon l'une ou plusieurs des revendications précédentes 1-5, lesdits mélanges comprenant:
a) des matériaux inertes avec une granulométrie dans une plage de 0,05-30 mm, avec un débit volumique dans une plage de 20-60%,
b1) des cendres de déchets urbains soldes brûlés d'une granulométrie dans une plage de 0,05-30 mm et d'un débit volumique d'au moins 10%,
b2) des cendres légères, par exemple de hauts fourneaux ou de charbon brûlé de système de puissance thermo-électriques, avec une granulométrie dans une plage de 0,001-1,0 mm et un débit volumique dans une plage de 8-10%, et
des scores de hauts fourneaux, de hauts fourneaux de travaux métallurgiques avec une granulométrie dans une plage de 0,05-3 mm et un débit volumique dans une plage de 9-15%, et
c) des catalyseurs de base aptes à fournir, après addition d'eau, un environnement de base ayant un pH d'au moins 11.

8. Mélanges selon l'une ou plusieurs des revendications précédentes 1-5, lesdits mélanges comprenant:
a) des matériaux inertes avec une granulométrie dans une plage de 0,05-15 mm et un débit volumique de 37%,
b1) des cendres de déchets brûlés avec une granulométrie dans une plage de 0,05 à 30 mm et un débit volumique de 50%,
b2) des scories, avec une granulométrie dans une plage de 0,1-1,5 mm et un débit volumique de 12%, et
c) des catalyseurs basiques
sous une forme de poudre, dans un débit volumique de 0,6%, et
dans une forme diluée avec de l'eau à 50%, dans un débit volumique de 0,4%.

9. Mélanges selon l'une ou plusieurs des revendications précédentes 1-5, lesdits mélanges comprenant:
a) des matériaux inertes avec une granulométrie dans une plage de 0,001-15 mm et un débit volumique de 50%,
b1) des cendres lourdes et légères, dérivées de processus de combustion de déchets, avec une granulométrie dans une plage de 0,05-30 mm et un débit volumique de 39%,
b2) des scories, avec une granulométrie dans une plage de 0,1-1,5 mm et un débit volumique de 10%, et
c) des catalyseurs basiques sous forme de poudre, avec un débit volumique de 1%.

10. Article fabriqué, sous la forme de ramblais de route et de chemin de fer, superstructures et planchers de cour, **caractérisé en ce que** ledit article fabriqué est réalisé en commençant avec des agglomérés préparées par les mélanges selon l'une ou plusieurs des revendications précédentes.
